# EUROPEAN PATENT SPECIFICATION

(11) **EP 1 647 205 B1**
(45) Date of publication and mention of the grant of the patent: **28.12.2011**
(21) Application number: 04736982.2
(22) Date of filing: 17.06.2004
(51) Int. Cl.: A47B 47/00, A47B 96/14

(54) **FURNITURE STRUCTURE FOR THE PRODUCTION OF CABINETS, BOOKCASES AND SIMILAR**
MÖBELSTRUKTUR FÜR DIE HERSTELLUNG VON SCHRÄNKEN, BÜCHERREGALEN U. Ä.
STRUCTURE DE MEUBLE POUR LA FABRICATION D'ARMOIRES, DE BIBLIOTHEQUES ET DE MEUBLES ANALOGUES

(30) Priority: 19.06.2003 ES 200301499 U
(43) Date of publication of application: 19.04.2006
(73) Proprietor: Grupo T Diffusion, s.a., E-08820 El Prat de Llobregat (ES)
(72) Inventor: LLONCH FONTANET, Pedro, E-08820 El Prat de Llobregat (ES)
(74) Representative: Aragones Forner, Rafael Angel
(86) International application number: PCT/ES2004/000279
(87) International publication number: WO 2004/112540

(56) References cited:
- DE-U- 7 733 462
- GB-A- 1 281 521
- US-A- 3 285 444
- US-A- 5 524 977
- US-B1- 6 398 322

## Description

### OBJECT OF THE INVENTION

The present invention has as its object a furniture item structure for forming cupboards, bookcases and the like comprising a number of shelves being possibly provided with partitions, doors, drawers, files, show windows and the like allowing to fulfil multiple functions.

### FIELD OF THE INVENTION

The known furniture items of this type normally consist in a structure being made up of a number of corresponding pieces that are assembled together by means of tools and appliances using joining and fastening elements such as screws nails, rivets and other fasteners.

In most cases the furniture item structure forms a single structure to/from which some of its components such as doors and other components can be fitted/removed.

In other cases the structure can be assembled by the user, this latter nevertheless having to use tools and/or appliances for drilling holes or for carrying out screwing nailing, riveting and/or screw fastening operations, etc., which implies that the user will have to use and hence have at his or her disposal the tools and means being necessary for securing and fastening the components making up the furniture item structure.

There are at present some furniture items that are sold to the public in a dismantled state in such a way that the user is in a position to assemble them with a minimum of tools/appliances and elements such as nails, screws, etc. for the furniture item structure to be sufficiently solid, said furniture items nevertheless having the drawback that the user still needs to use tools in order to have them assembled.

The document of US patent no 3,285,444 describes a prefabricated knock-down skeletal structure formed of a plurality of separate prefabricated components including two kinds of elements: upright posts and horizontal girders, which girders are connectable to the posts to form an unitary rigid skeletal frame, said girders comprising an elongated rigid main body of substantially H-shaped cross section having:
(i)an inner wall having at least two flanges extending at right angles to said wall and forming therewith one inwardly facing U-channel;
(ii) a substantially thin and narrow outer wall parallel to and spaced from the substantially wide inner wall;
(iii) a substantially thick load carrying web spacing said walls and connected thereto centrally between the upper and lower edges of said walls, said web being formed integrally with said walls;
(iv) an upwardly facing U-channel and a downwardly facing U-channel defined bay said walls and said web.

The furniture item structure for forming cupboards, bookcases and the like being the object of the present invention obviates the aforementioned drawbacks regarding the need for the user to use tools in order to carry out the assembly of the furniture item structure in question.

The furniture item structure of the present invention does not accordingly require the user to have to use tools in order to get it assembled.

The present invention has in general lines as its object a furniture item structure for forming cupboards, bookcases and the like being quite solid as befits their size and structure once having been assembled, the present invention being for such a purpose based on the principle that the different components of the furniture item structure are fit to be directly fitted to each other in a mutually fitting connection in combination with easily preassemblable, rigid frames making up the different horizontal levels of the piece of furniture, said different horizontal levels possibly having the same or a different height, said rigid frames giving solidity to the furniture item both in the horizontal and in the vertical directions in cooperation with the mutually fitting connections of the components of the structure.

According to the present invention the furniture item structure for forming cupboards, bookcases and the like is essentially characterised in that each shelf and/or equivalent level comprises an upper frame and a lower frame being provided with mutually facing channel grooves between which those boards are made to fit which make up the sides and the back, and with an inner ledge upon which the board making up the lower and/or upper shelf comes to rest and fit, the whole assembly being delimited by an upper end frame and a lower end frame.

According to the invention said frames are made up of an extruded hollow profile making up the sides of the structure, said sides being secured to each other at the corners by means of angle plates.

According to the invention said hollow profile have a main portion having an essentially H-shaped configuration and laterally extending into an intermediary, hollow ledge, said main H-shaped profile defining two upperly and inferiorly opposite channel grooves making up the mutually facing channel grooves into which the upper and lower boards of each shelf level are fitted, said intermediary, hollow ledge being innerly arranged in the frame when assembling this latter, the upper surface of said intermediary, hollow ledge making up the actual ledge upon which the board making up the shelf will fit and rest, the sides of the L-shaped angle plates joining the profile two adjacent sides at the corresponding corners being introduced into the hollow space of said intermediary, hollow ledge.

Each of the opposite channel grooves of the main H-shaped profile of the hollow profile in its turn comprises two mutually facing guides into which an essentially U-shaped channel being provided with longitudinal flanges externally projecting from the branches can be fitted, said channel being fit to be fitted into the mutually facing guides of the upper channel groove of the H-shaped profile in two positions namely being a first, inverted position in which the middle portion of the channel is upperly positioned and flush with the edges of said channel groove and of the board making up the shelf, and a second, normal position in which said middle portion is inferiorly positioned and acts as a guide for a board making up a sliding door of the shelf in question.

The invention comprises right-angled, essentially triangular plates that are to be inferiorly secured at each respective corner of the lower frame being adjacent to the floor, in the space being defined at the lower surface of the intermediary, hollow ledge of the hollow profile, said right-angled triangular plates allowing to inferiorly secure resting and/or rolling means.

The hollow profile can as well incorporate pins projecting in the opposite channel grooves of the H-shaped profile, said pins being made to fit into respective blind holes having been drilled in the side and back boards of the shelves, the cooperation between said pins and blind holes thus bringing about an improvement of both the mutual connection of the different components and the stability of the whole assembly.

The present invention provides for each shelf and/or equivalent level of the furniture item structure to have the same or a different height, which implies that the corresponding boards between the upper frame and the lower frame of each level will have the same or a different height.

The furniture item structure can as well comprise any number of levels, and hence it can have the height being desired by the user.

The shelf and/or equivalent levels have the same and/or a different height, the back and side boards and/or the partitions between the upper frame and the lower frame of the respective shelf hence having the corresponding height. The structure comprises the appropriate number of shelf and/or equivalent levels and thus allows to increase/reduce the number of levels and hence the height by adding/removing levels as desired. The parts making up the structure are fit to be directly assembled together/disassembled by the user by simply fitting them to each other in a mutually fitting connection.

These and other features will be best made apparent by the following detailed description whose understanding will be made easier by the accompanying two sheets of drawings showing a practical embodiment being cited only by way of example not limiting the scope of the present invention.

### DESCRIPTION OF THE DRAWINGS

In the drawings:
Fig. 1 is an exploded view of the furniture item structure of the present invention illustrating two levels.

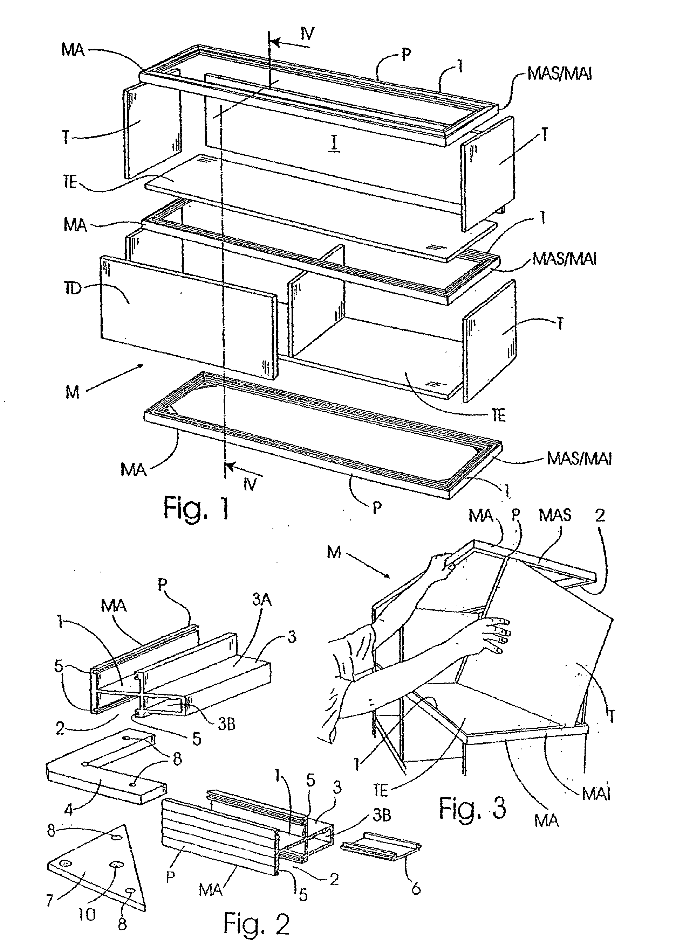

Fig. 2 is an exploded and fragmentary view illustrating the fragmentary main hollow profile making up the furniture item structure frame defining the two upperly and inferiorly opposite channel grooves and the intermediary, hollow ledge, said hollow profile forming two consecutive sides of the frame, the additional channel making up the sliding door rest or leveller, the L-shaped angle plate to be provided as a joining element at each corner of each frame, said L-shaped angle plate being made to fit into the corresponding hollow ledges, and the right-angled triangular plate being provided to be inferiorly fitted at each corner of the structure.
Fig. 3 is a perspective view illustrating the assembly of the furniture item structure being directly carried out by the labourer without using tools in the process.
Fig. 4 is a fragmentary, sectional view as seen in a side elevation of the furniture item structure showing two shelf levels.
Fig. 5 is a fragmentary plan-view showing the L-shaped angle plate being fitted at a corner into the main hollow profile of the consecutive sides, and the lower right-angled triangular plate being fitted thereto.
Fig. 6 is a front perspective view of an embodiment of the assembled furniture item structure.

### DETAILED DESCRIPTION

According to the drawings the furniture item structure for forming cupboards, bookcases and the like being the object of the present invention as generally designated at -M- is made up of a superimposed succession of shelves being designated at -E- going from the floor or lowest one -EI- up to the one -ES- being located at the highest level.

The furniture item structure -M- of the invention comprises a plurality of frames -MA-, each shelf level - EI- to -ES- comprising an upper frame -MAS- and a lower frame -MAI-. Said frames -MA- are provided with opposite channel grooves namely being an upper channel groove -1- and a lower channel groove -2- between which the boards - T- making up the sides and the back are made to fit, and with an intermediary, hollow ledge -3- extending towards the inside of the frame -MA-, the board -TE- making up the lower and/or upper shelf coming to rest and fit upon said intermediary, hollow ledge.

According to the invention said frames -MA- are made up of a main hollow profile -P-, this latter being an extruded section making up the sides of the frame -MA-, these latter being for such a purpose secured to each other at the corners by means of L-shaped angle plates - 4-.

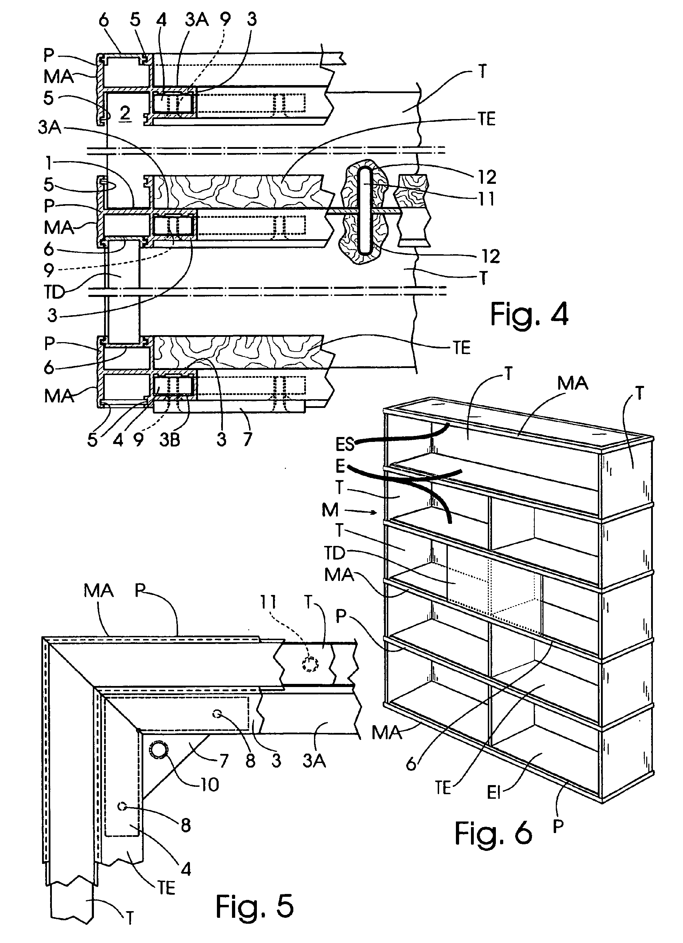

As shown in the Figures, especially in Figs. 2 and 4, the aforementioned main hollow profile -P- have a main portion having an essentially H-shaped configuration laterally extending into the intermediary, hollow ledge - 3-, said H-shaped main profile defining two opposite channel grooves namely being an upper channel groove -1- and a lower channel groove -2- making up the mutually facing channel grooves into which the upper and lower boards -T- making up the sides or the back are made to fit, said intermediary, hollow ledge -3- being innerly arranged in the frame -MA- when carrying out the assembly of this latter (see especially Figs. 4 and 5). The upper surface -3A- of the ledge -3- makes up the actual ledge upon which the board -TE- making up the slab of the ledge -E- will fit and rest, the sides of the L-shaped angle plates -4- joining the profile -P- of two adjacent sides at the corresponding corners being introduced into the hollow space -3B- of said intermediary, hollow ledge (see Figs. 2 and 5).

As illustrated in the drawings, each of the opposite channel grooves -1-, -2- of the main H-shaped profile of the main hollow shape -P- comprises two mutually facing guides -5-, -5- into which an essentially U-shaped channel -6- being provided with longitudinal flanges externally projecting from the branches can be fitted, said additional channel -6- being fit to be fitted into the mutually facing guides -5-, -5- of the upper channel groove -1- of the H-shaped profile in two positions namely being a first, inverted position in which the middle portion of the additional channel -6- is upperly positioned and flush with the edges of said channel groove -1- and of the board -TE- making up the slab of the shelf -E-, see Fig. 4 illustrating said additional channel -6- in an inverted position at the top of the upper shelf -ES-, and a second, normal position in which said middle portion is inferiorly positioned as shown in the same Fig 4 at the lower frame of the lower shelf, said middle portion in this latter position acting as a guide for a board making up a sliding door -PD- of the shelf in question.

The furniture item structure -M- of the invention comprises right-angled, essentially triangular plates -7- that are to be inferiorly secured at a respective corner of the lower frame -MA- being adjacent to the floor, in the space being defined at the lower surface of the intermediary, hollow ledge -3- (see the lower portion of Fig. 4 and Fig. 5). Said right-angled triangular plates - 7- additionally allow to inferiorly secure resting and/or rolling means. As illustrated in the Figures, the intermediary, hollow ledge -3-, the L-shaped angle plate -4- and the right-angled triangular plate -7- are provided with respective coincident holes -8- for their fastening by means of screws -9- or the like. The right-angled triangular plate does besides have an orifice -10- allowing to secure a rest or wheel.

In order to improve the direct fitting of the components in a mutually fitting connection thus enhancing the solidity of the structure, the hollow profile -P- can incorporate pins -11- projecting in the opposite channel grooves -1-, -2-, said pins being made to fit into respective blind holes -12- having been drilled in the edges of the side and back boards -T- of the shelves -ES-, the cooperation between said pins -11- and blind holes -12- thus bringing about an improvement of both the mutual connection of the different components and the stability of the whole assembly.

The present invention provides for the shelf levels -ES- to have the same height or different heights, the boards -T- hence having the corresponding height. The furniture item structure can likewise have any desired height as resulting from the number of shelf levels and/or from the height of these latter.

It is finally to be pointed out that the furniture item structure of the present invention can be easily and directly assembled/disassembled by the user, i.e. without requiring the use of tools, since the different components of the structure are fit to be simply fitted to each other in a mutually fitting connection.

The material of the frames -MA- making up the horizontal structures defining the shelves of the piece of furniture can be any convenient material, although said frames are preferably made of extruded metal, but said material could as well be a plastics material based on a hard, tough, nonbrittle resin.

The back and side boards -T- and those making up the slab -TE- of each shelf level can be of any convenient material, and hence they can even be particle boards having their surfaces coated with respective claddings.

It has to be borne in mind that regardless of the preferred furniture item embodiment having been represented in the drawings the furniture item structure being the object of the present invention allows the very user to form and hence assemble/disassemble any type of furniture item, whether a cupboard, a bookcase or any other piece of furniture as desired by the user, all this with no need to use tools in the process.

## Claims

1. - A furniture item structure for forming cupboards, bookcases and the like comprising a number of shelves being possibly provided with partitions, doors, drawers, files, show windows and the like; in such way that each shelves comprising an upper frame and a lower frame being provided with mutually facing channel grooves between which those lateral vertical boards are made to fit, and with an inner support upon which the shelf of each level fit and rest, and said upper and lower frames (MA, MATS, MAI) are made up of an extruded profile (P), making up the sides of the structure, and said sides being secured to each other at the corners by means of angle plates (4), **characterised in that** said extruded profile (P) have a main portion having an essentially H-shaped configuration and laterally extending into an intermediary, hollow ledge (3), said main H-shaped portion defining two upperly and inferiorly opposite channel grooves (1, 2) making up the mutually facing channel grooves into which the upper and lower boards (T) of each shelf level are fitted, said intermediary, hollow ledge (3) being innerly arranged in the frame when assembling this latter, comprising an upper surface (3A) upon which the shelf (TE) will fit and rest, and a hollow space (3B) in which being introduced, the sides of the L-shaped angle plates (4) joining the profiles (P) of two adjacent sides at the corresponding corners.

2. - A furniture item structure according to claim 1, **characterised in that** each of the opposite channel grooves (1, 2) of the main H-shaped profile (P) of the hollow profile comprises two mutually facing guides into which an essentially U-shaped secondary profile (6) being provided with longitudinal flanges externally projecting from the branches can be fitted, said secondary profile (6) being fit to be fitted into the mutually facing guides of the upper channel groove (1) of the H-shaped profile (P) in two positions namely being a first, inverted position in which the middle portion of the secondary profile (6) is upperly positioned and flush with the edges of said groove and of the board making up the shelf, and a second, normal position in which said middle portion is inferiorly positioned and acts as a guide for a board making up a sliding door of the shelf in question.

3. - A furniture item structure according to claim 2, **characterised in that** it comprises right-angled, essentially triangular plates (4) that are to be inferiorly secured at a respective corner of the lower frame (MAI) being adjacent to the floor, in the space being defined at the lower surface of the intermediary, hollow ledge (3) of the hollow profile (P), said right-angled triangular plates (4), allowing to inferiorly secure resting and/or rolling means.

4. - A furniture item structure according to claim 2, **characterised in that** the hollow profile (P) eventually incorporates pins projecting in the opposite channel grooves (1, 2) of the H-shapedprofile (P), said pins (11) being made to fit into respective blind holes (12) having been drilled in the side and back boards (T) of the shelves (ES), the cooperation between said pins (11) and blind holes (12), thus bringing about an improvement of both the mutual connection of the different components and the stability of the whole assembly.

5. - A furniture item structure according to the preceding claims, **characterised in that** the shelf and/or equivalent levels have the same and/or a different height, the back and side boards (T) and/or the partitions between the upper frame (MAS) and the lower frame (MAI) of the respective shelf hence having the corresponding height; **in that** the structure comprises the appropriate number of shelf and/or equivalent levels and thus allows to increase/reduce the number of levels and hence the height by adding/removing levels as desired; and **in that** the parts making up the structure are fit to be directly.

## Patentansprüche

1. Möbelstückkonstruktion zur Bildung von Schränken, Bücherregalen und dergleichen, bestehend aus einer Reihe von Regalen, die möglicherweise mit Trennwänden, Türen, Schubläden, Aktenfächern, Sichtscheiben und dergleichen versehen werden können, wobei jedes Regal einen oberen und einen unteren Rahmen umfasst, die mit einander zugewandten Nuten, zwischen denen die vertikalen Seitenbretter eingepasst werden, und mit einer inneren Stütze, auf der das jeweilige Regal der einzelnen Ebenen passgerecht aufliegt, versehen sind und wobei die oberen und unteren Rahmen (MA, MAS, MAI) aus Strangpressprofilen (P) gefertigt sind, die die Seiten der Konstruktion bilden, wobei die Seiten an den Ecken durch Winkelplatten (4) aneinander befestigt sind, **dadurch gekennzeichnet, dass** die Strangpressprofile (P) einen Hauptteil mit einer im Wesentlichen H-förmigen Ausgestaltung aufweisen und sich seitlich zu einer zwischenliegenden Hohlleiste (3) erstrecken, wobei der H-förmige Teil zwei oben und unten gegenüberliegende Nuten (1, 2) bildet, bei denen es sich um die einander zugewandten Nuten handelt, in die die oberen und unteren Bretter (T) der einzelnen Regalebenen eingepasst werden, wobei die zwischenliegende Hohlleiste (3) beim Zusammenbau des Rahmens im Inneren desselben angeordnet ist und aus einer oberen Fläche (3A), auf der das Regal (TE) passgerecht aufliegt, und einem Hohlraum (3B), in den die Seiten der L-förmigen Winkelplatten (4) eingeführt und mit den Profilen (P) von zwei angrenzenden Seiten an den entsprechenden Ecken verbunden werden, besteht.

2. Möbelstückkonstruktion nach Anspruch 1, **dadurch gekennzeichnet, dass** jede der gegenüberliegenden Nuten (1, 2) des H-förmigen Hauptteils (P) des Hohlprofils zwei einander zugewandte Führungen aufweist, in die ein im Wesentlichen U-förmiges mit nach außen aus den Seitenarmen herausragenden Längsflanschen versehenes Nebenprofil (6) eingepasst werden kann, wobei das Nebenprofil (6) geeignet ist, um in die einander zugewandten Führungen der oberen Nute (1) des H-förmigen Profils (P) in zwei Positionen angebracht zu werden, nämlich in einer ersten, umgekehrten Position, in welcher der Mittelteil des Nebenprofils (6) oben positioniert ist und mit den Rändern der Nute und des Brettes, welches das Regal bildet, bündig abschließt, und in einer zweiten, normalen Position, in welcher der Mittelteil unten positioniert ist und als Führung für ein Brett dient, das eine Schiebetür des jeweiligen Regals bildet.

3. Möbelstückkonstruktion nach Anspruch 2, **dadurch gekennzeichnet, dass** sie rechtwinklige im Wesentlichen dreieckige Platten (4) umfasst, die von unten an der jeweiligen Ecke des unteren an den Boden angrenzenden Rahmens (MAI) befestigt werden, und zwar in dem Raum, der an der unteren Fläche der zwischenliegenden Hohlleiste (3) des Hohlprofils (P) definiert wird, wobei die rechtwinkligen dreieckigen Platten (4) die untere Befestigung von Auflage- und/oder Rollmitteln erlauben.

4. Möbelstückkonstruktion nach Anspruch 2, **dadurch gekennzeichnet, dass** das Hohlprofil (P) Bolzen umfassen kann, die in die gegenüberliegenden Nuten (1, 2) des H-förmigen Profils hineinreichen, wobei diese Bolzen (11) so gestaltet sind, dass sie in entsprechende Blindbohrungen (12), die in den seitlichen und rückwärtigen Brettern (T) der Regale (ES) vorgesehen sind, hineinpassen, wobei durch das Zusammenwirken zwischen den Bolzen (11) und den Blindbohrungen (12) eine Verbesserung sowohl der Verbindung der einzelnen Komponenten untereinander als auch der Standfestigkeit des gesamten Aufbaus erzielt wird.

5. Möbelstückkonstruktion nach den vorhergehenden Ansprüchen, **dadurch gekennzeichnet, dass** die Regalebenen und/oder äquivalenten Ebenen gleich und/oder unterschiedlich hoch sind und daher die rückwärtigen und seitlichen Bretter (T) und/oder Trennwände zwischen dem oberen Rahmen (MAS) und dem unteren Rahmen (MAI) des jeweiligen Regals die entsprechende Höhe besitzen; **dadurch gekennzeichnet, dass** die Konstruktion eine angemessene Anzahl an Regalebenen und/oder äquivalenten Ebenen umfasst und somit die Erhöhung/Verringerung der Anzahl der Ebenen und folglich der Höhe durch die beliebige Hinzufügung/Wegnahme von Ebenen erlaubt, und **dadurch gekennzeichnet, dass** die Teile, aus denen die Konstruktion besteht, für den direkten Zusammenbau geeignet sind.

## Revendications

1. Une structure de mobilier pour former des placards, des bibliothèques et similaires, comprenant un certain nombre d'étagères, pouvant être fournie avec des partitions, portes, tiroirs, archives, vitrines et similaires ; de sorte que chaque étagère comprend un cadre supérieur et un cadre inférieur munis de rainures de rail se faisant mutuellement face entre lesquelles lesdites planches verticales latérales viennent s'adapter, et avec un support intérieur sur lequel l'étagère de chaque niveau s'adapte et repose, et lesdits cadres supérieurs et inférieurs (MA, MAS, MAI) sont composés d'un profilé extrudé (P), constituant les côtés de la structure, et lesdits côtés sont fixés les uns aux autres aux angles au moyen de plaques angulaires (4), **caractérisée en ce que** ledit profilé extrudé (P) a une portion principale ayant essentiellement une forme en H et s'étendant latéralement dans un rebord intermédiaire et creux (3), ladite portion principale en H définissant deux rainures de rail opposées au niveau supérieur et inférieur (1, 2), créant les rainures de rail se faisant mutuellement face dans lesquelles les planches supérieures et inférieures (T) de chaque étagère s'adaptent, ledit rebord intermédiaire et creux (3) étant disposé intérieurement dans un cadre quand il est par la suite assemblé, comprenant une surface supérieure (3A) sur laquelle l'étagère (TE) s'adaptera et reposera, et un espace creux (3B) dans lequel elle est introduite, les côtés des plaques angulaires en (4) rejoignant les profilés (P) de deux côtés adjacents aux angles correspondants.

2. Une structure de mobilier conformément à la revendication 1, **caractérisée en ce que** chaque rainure de rail opposée (1, 2) du principal profilé en H (P) du profilé creux comprend deux guides se faisant mutuellement face dans lesquels un profilé secondaire essentiellement en U (6), muni de collets longitudinaux projetés extérieurement depuis les branches, peut être adapté, ledit profilé secondaire (6) étant adapté pour être logé dans les guides se faisant mutuellement face de la rainure de rail supérieure (1) du profilé en H (P) dans deux positions, à savoir une première position inversée dans laquelle la demi-portion du profilé secondaire (6) est positionné supérieurement et est aligné avec les bords de ladite rainure et de la planche constituant l'étagère, et une seconde, une position normale dans laquelle ladite demi-portion est inférieurement positionnée et agit comme guide pour une planche constituant une porte coulissante de l'étagère en question.

3. Une structure de mobilier conformément à la revendication 2, **caractérisée en ce qu'**elle comprend des plaques en angle droit et essentiellement triangulaires (4) qui doivent être inférieurement fixées à l'angle respectif du cadre inférieur (MAI) étant adjacent au sol, dans l'espace défini à la surface inférieure du rebord intermédiaire et creux (3) du profil creux (P), lesdites plaques en angle droit triangulaires (4) permettant de fixer inférieurement des moyens de soutien et/ou de roulement.

4. Une structure de mobilier conformément à la revendication 2, **caractérisée en ce que** le profilé creux (P) incorpore éventuellement des broches projetées sur les rainures de rail opposées (1, 2) du profilé en H (P), lesdites broches (11) étant faites pour s'adapter dans des trous aveugles respectifs (12) qui ont été perforés sur les planches latérales et arrière (T) des étagères (ES), la coopération entre ces broches (11) et les trous aveugles (12) apportant donc une amélioration à la fois des connexions mutuelles des différents composants et de la stabilité de tout l'ensemble.

5. Une structure de mobilier conformément aux revendications précédentes, **caractérisée en ce que** l'étagère et/ou les niveaux équivalents ont la même hauteur et/ou des hauteurs différentes, les planches arrière et latérales (T) et/ou les partitions entre le cadre supérieur (MAS) et le cadre inférieur (MAI) de l'étagère respective, ayant donc le poids correspondant ; **en ce que** la structure comprend le nombre approprié d'étagères et/ou niveaux équivalents et permet donc d'augmenter/réduire le nombre de niveaux et donc le poids en ajoutant/retirant des niveaux à volonté ; et **en ce que** les parties composant la structure sont directement adaptées.
